# EUROPÄISCHE PATENTANMELDUNG

(11) **EP 1 243 489 A2**
(43) Veröffentlichungstag der Anmeldung: **25.09.2002**
(21) Anmeldenummer: 02005001.9
(22) Anmeldetag: 06.03.2002
(51) Int. Cl.: B60S 1/38, B60S 1/40

(54) **Bügelloses Wischblatt**

(30) Priorität: 21.03.2001 DE 10113680
(71) Anmelder: ROBERT BOSCH GMBH, 70442 Stuttgart (DE)
(72) Erfinder: Bauer, Peter-Josef, 3300 Tienen (BE); Wilms, Christian, 3582 Beringen (BE); Verelst, Hubert, 3300 Tienen (BE); Grammens, Joris, 3350 Linter (BE)

(57) **Zusammenfassung**

Die Erfindung geht von einem bügellosen Wischblatt (10) mit einer Wischleiste (12) aus einem elastomeren Werkstoff aus, die eine hydrophobe Oberfläche aufweist, durch ein Tragelement (16, 28) verstärkt ist und in der Mitte zusammen mit dem Tragelement (28) von einem Anschlussstück (18) und einen Adapter (30) gehalten wird. Es wird vorgeschlagen, dass das Anschlussstück (18) und der Adapter (30) ebenfalls eine hydrophobe Oberfläche aufweisen.

## Beschreibung

### Stand der Technik

Die Erfindung geht von einem bügellosen Wischblatt nach dem Oberbegriff des Anspruchs 1 aus.

Bekannte Scheibenwischer besitzen einen Wischarm, der aus einem Befestigungsteil und einem über ein Abklappgelenk daran angelenkten Gelenkteil mit einer Wischstange aufgebaut ist. An der Wischstange ist ein Wischblatt angelenkt, indem das freie Ende der Wischstange in ein Anschlussstück am Wischblatt greift. Das so gebildete Gelenk führt das Wischblatt während der Schwenkbewegung über die Fahrzeugscheibe.

In der Regel weist das Wischblatt ein Tragbügelsystem auf, das aus mehreren Bügeln aufgebaut ist, von denen einige mit Krallen an ihren Enden eine Wischleiste an deren Kopfleiste halten. Das mehrgliederige Tragbügelsystem und in die Kopfleiste eingelegte Federschienen ermöglichen, dass sich die Wischleiste beim Wischen mit einem gleichmäßigen Auflagedruck einer gebogenen Fahrzeugscheibe anpasst.

Bei vereinfachten Ausführungen werden die Bügel des Tragbügelsystems durch ein Tragelement ersetzt, das den Anpressdruck elastisch auf die Wischleiste verteilt. Das Tragelement kann biegsam und vorzugsweise aus thermoplastischem Kunststoff hergestellt sein, so dass es sich im eingebauten Zustand einer gekrümmten Fahrzeugscheibe anpasst. Außerdem ist es lang gestreckt und besitzt an der zur Fahrzeugscheibe weisenden Seite eine ebene Verbindungsfläche, an der die Wischleiste angeklebt ist. In einer anderen Ausführung besteht das Tragelement aus einer oder zwei Federschienen, die in seitliche Längsnuten oder einen mittigen Längskanal eingelegt sind. Die Enden der Längsnuten bzw. des Längskanals sind durch Kappen verschlossen, die auf die Wischleiste aufgeschoben werden und in deren Profil eingreifen.

Die Wischleiste besteht aus einem Elastomer, z.B. einem Natur- oder Synthesekautschuk. Sie wird beispielsweise durch Extrusion hergestellt und besitzt dann eine glatte, günstige Oberfläche, die aber nicht besonders verschleißfest ist, so dass die Wischleiste insgesamt gehärtet oder eine Schutzschicht aufgebracht werden muss. Aus der DE 198 14 804 A1 ist eine Schutzschicht bekannt, die im dampfförmigen Zustand plasmaunterstützt aufgebracht wird und das Elastomer verschleißfester macht. Diese Schutzschicht wird durch CVD-Prozesse (Chemical Vapour Deposition, Chemischer Dampfablagerungs-Prozess) und/oder PVC-Prozesse (Physical Vapour Deposition, Physikalischer Dampfablagerungs-Prozess) hergestellt und ist besonders dünn, geschlossen und hochvernetzt ausgeführt. Außerdem bleibt die geschlossene Oberfläche bei Verformungen der Wischleiste erhalten. Schließlich wird vorgeschlagen, dass das Schichtsystem abschließend zusätzlich eine hydrophobe Schicht hat, welche einen Wasserbenetzungsrandwinkel von vorzugsweise 90 bis 150 Grad aufweist.

Durch die hydrophobe Schicht weist die Wischleiste auf der hydrophilen Scheibenoberfläche ein gutes Wischverhalten auf, da sie das Wasser, das an der Scheibe haftet, während des Wischvorgangs zur Seite wischt, ohne selbst nennenswert benetzt zu werden. Da aber die anderen Bauteile des Wischblatts keine hydrophobe Oberfläche aufweisen, sammeln sich an diesen Wassertropfen, die bei höherer Geschwindigkeit des Fahrzeugs durch den Fahrtwind und/oder durch Erschütterungen hinter dem Wischblatt auf die saubere Scheibe geschleudert werden und das Wischergebnis verschlechtern. Dieser Effekt wirkt sich bei bügellosen Wischblättern besonders negativ aus, da sie flach bauen und die Tragelemente, die Kappen sowie das Anschlussstück einen geringen Abstand zur Fahrzeugscheibe haben, so dass die abgelösten Wassertropfen konzentriert auf die Scheibe fallen.

Aus der DE 198 14 805 A1 ist ein Beschichtungsverfahren für Wischleisten bekannt, bei dem ein Plasmagas an einer Kathode vorbei durch eine Anode strömt und dabei in einen plasmaförmigen Zustand versetzt wird. Dem Plasma wird im Bereich der Anode ein Monomergas zugeführt, das von dem Plasma fragmentiert und in Richtung einer Wischleiste geschleudert wird. Das fragmentierte Monomergas lagert sich auf der Wischleiste ab und reagiert an deren Oberfläche zu einem hochvernetzenden Schichtsystem oder zu einer einzelnen Schicht. Das Verfahren ist geeignet, hydrophobe Oberflächen an Kunsstoffteilen zu erzeugen.

### Vorteile der Erfindung

Nach der Erfindung weisen das Anschlussstück und der Adapter eines bügellosen Wischblatts ebenfalls eine hydrophobe Oberfläche auf. Zudem besitzen auch alle anderen Bauteile eines solchen Wischblatts, wie das Tragelement und die auf den Enden der Wischleiste aufgesetzten Kappen eine hydrophobe Oberfläche, so dass optimal das gesamte Wischblatt Wasser abweisende Oberflächen aufweist und sich keine großen Wassertropfen absetzen können, welche auf die gesäuberte Fahrzeugscheibe geschleudert werden. Das Wasser verbleibt auf der Fahrzeugscheibe und wird nicht beim Wischvorgang durch das Wischblatt aufgenommen, sondern sicher weg gewischt. Nach dem Wischvorgang ist die Fahrzeugscheibe optimal gereinigt und der Fahrer hat eine gute Sicht.

Das Tragelement, das Anschlussstück, der Adapter und die Kappen können aus einem solchen Kunststoff hergestellt sein, der beim Herstellungsverfahren eine hydrophobe Oberfläche ergibt. Diese kann aber auch nachträglich durch eine zusätzliche Schicht mit einem der oben genannten Verfahren erzeugt werden. Die bewährte Fertigung der einzelnen Bauteile des bügellosen Wischblatts wird dadurch nicht verändert. Vielmehr wird sie nur durch den zusätzlichen Arbeitsgang zum Aufbringen der zusätzlichen Schicht ergänzt.

Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

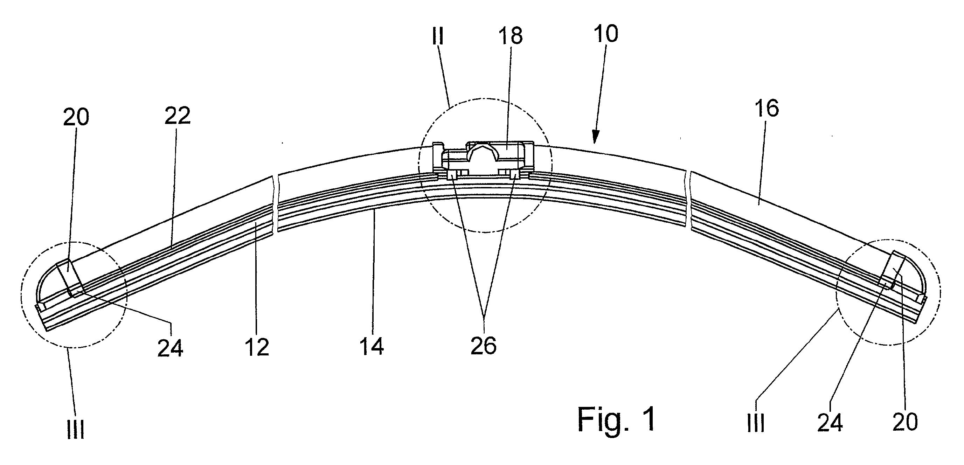

- Fig. 1: ein bügelloses Wischblatt in einer Seitenansicht,

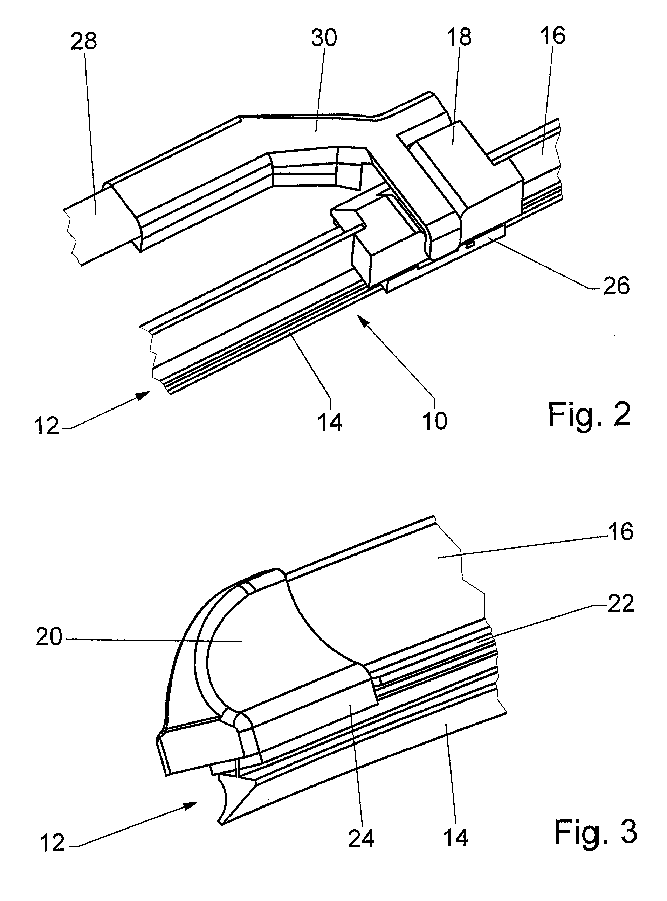

- Fig. 2: ein vergrößertes Detail entsprechend der Linie II Fig. 1 und
- Fig. 3: ein vergrößertes Detail entsprechend der Linie III Fig. 1.

### Beschreibung der Ausführungsbeispiele

Ein bügelloses Wischblatt 10 hat eine elastomere Wischleiste 12 mit einer Wischlippe 14. Als Tragelement dienen zwei Federschienen 22 aus Federstahl, die in seitliche Längsnuten des Profils der Wischleiste 12 eingelegt sind. In der Mitte der Wischleiste 12 umfasst ein Anschlussstück 18 mit Klauen 26 den oberen Teil der Wischleiste zusammen mit den Federschienen 22, wobei die Klauen 26 seitlich in das Profil der Wischleiste 12 eingreifen. Das Anschlussstück 18, das somit die Federschienen 22 seitlich hält, ist über einen Adapter 30 gelenkig mit einer Wischstange 28 verbunden. An den Enden des Wischblatts 10 sind Kappen 20 aufgesetzt, die mit Klauen 24 in das Profil der Wischleiste 12 eingreifen und die Federschiene 22 axial und seitlich in den Längsnuten der Wischleiste 12 fixieren.

Die elastisch verformbare Wischleiste 12 ist im unbelasteten Zustand in Längsrichtung stärker gekrümmt als die Fahrzeugscheibe, so dass sie sich unter der Anpresskraft der Wischstange 28 mit einem definierten Anpressdruck an eine nicht dargestellte Fahrzeugscheibe anlegt.

Die Wischleiste 12 besitzt an ihrer Oberseite einen Spoiler 16, der unmittelbar angeformt und aus dem gleichen Werkstoff bestehen kann. Er versteift die Wischleiste 12 und erhöht den Anpressdruck, insbesondere mit zunehmendem Fahrtwind. Der Spoiler 16 kann auch ein separates Bauteil aus einem anderen geeigneten Kunststoff sein, das an der zur Fahrzeugscheibe weisenden, flachen Seite mit der Wischleiste 12 z.B. durch Kleben verbunden ist. Der Spoiler 16 kann somit allein oder zusammen mit den Federschienen 22 das Tragelement des Wischblatts 10 bilden.

Die Wischleiste 12 mit ihrer Wischlippe 14, der Spoiler 16, das Anschlussstück 18, die Kappen 20 und der Adapter 30 erhalten in vorteilhafter Weise eine hydrophobe Oberfläche, so dass sich keine nennenswerte Wassermenge anlagern kann, die unkontrolliert auf die Fahrzeugscheibe geschleudert wird. Für die weit gehend im Profil der Wischleiste 12 eingebetteten Federschienen 22 ist eine hydrophobe Oberfläche nicht unbedingt notwendig, sie kann aber durch einen hydrophoben Lack oder eine geeignete Beschichtung erzeugt werden.

## Patentansprüche

1. Bügelloses Wischblatt (10) mit einer Wischleiste (12) aus einem elastomeren Werkstoff, die eine hydrophobe Oberfläche aufweist, durch ein Tragelement (16, 28) verstärkt ist und in der Mitte zusammen mit dem Tragelement (28) von einem Anschlussstück (18) und einen Adapter (30) gehalten wird, **dadurch gekennzeichnet, dass** das Anschlussstück (18) und der Adapter (30) ebenfalls eine hydrophobe Oberfläche aufweisen.

2. Wischblatt (10) nach Anspruch 1, **dadurch gekennzeichnet, dass** auf die Enden der Wischleiste (12) Kappen (20) aus Kunststoff aufgesetzt sind, die eine hydrophobe Oberfläche aufweisen.

3. Wischblatt (10) nach einem der vorhergehenden Ansprüche, **dadurch gekennzeichnet, dass** das Tragelement (16) eine Schiene aus Kunststoff ist, an der die Wischleiste (12) befestigt ist, und dass die Schiene (16) eine hydrophobe Oberfläche hat.

4. Wischblatt (10) nach einem der vorhergehenden Ansprüche, **dadurch gekennzeichnet, dass** an dem Rücken der Wischleiste (12) oder der Schiene (16) ein Spoiler angeformt ist, der eine hydrophobe Oberfläche aufweist.
